# EUROPEAN PATENT APPLICATION

(11) **EP 1 310 887 A1**
(43) Date of publication of application: **14.05.2003**
(21) Application number: 01830687.8
(22) Date of filing: 07.11.2001
(51) Int. Cl.: G06F 17/60, G06F 9/44

(54) **Process and system for automatically managing procedures, activities and workflows in the construction industry**

(71) Applicant: Concreto S.R.L., 10124 Torino (IT)
(72) Inventor: Demagistris, Paolo Eugenio, 10124 Torino (IT); De Marco, Alberto, 10124 Torino (IT)
(74) Representative: Garavelli, Paolo

(57) **Abstract**

A process and a system are disclosed for automatically managing activities and workflows in the construction industry. The process substantially comprises the steps of: connecting (F1) users (1) to a managing and processing unit (2); accessing (F2) to a reserved area (3) stored on the unit (2); displaying and possibly modifying (F3) the data within the area (3), in which such data are accessible to the user (1) in an exclusive and ordered way according to a hierarchical pipeline with a "parent - son" and a "predecessor - successor" attribute for every data; managing (F4) procedures related to constructions based on such data; and possibly programming and customising (F5) the data structure stored in the unit (2) by a user (1) having a system administrator profile.

## Description

The present invention refers to a process and to the related system for automatically managing procedures, activities and workflows in the construction industry, such activities and flows going from planning steps to testing steps according to the quality system and the legal standards in force.

In the field of activities and workflows in the construction industry, each one of the operators must perform a series of tasks assigned to him in order to be able to complete the assigned projects in compliance with the standards in force. Such tasks, each one implying several activities to be sometimes re-assigned to other operators and then to be checked, are often complicated and difficult to manage and follow, also from the point of view of reordering them by time and priority.

Currently no processes and systems are provided (see for example WO 01/55943) that allow automatically managing such tasks in order to efficiently complete the related projects.

Object of the present invention is solving the above prior-art problems, by providing a process and a system for automatically managing all project activities in the construction industry, in a simple, efficient, quick, safe and optimised way from the point of view of time and priority.

The above and other objects and advantages of the invention, as will appear from the following description, are obtained by a process and a system as respectively claimed in Claims 1 and 7. Preferred embodiments and non-trivial variations of the present invention are claimed in the dependent Claims.

The present invention will be better described by some preferred embodiments thereof, given as a nonlimiting example, with reference to the enclosed drawings, in which:
- Figure 1 is a schematic diagram of a possible embodiment of the system of the present invention; and
- Figure 2 is a block diagram that shows the main steps of the process of the present invention.

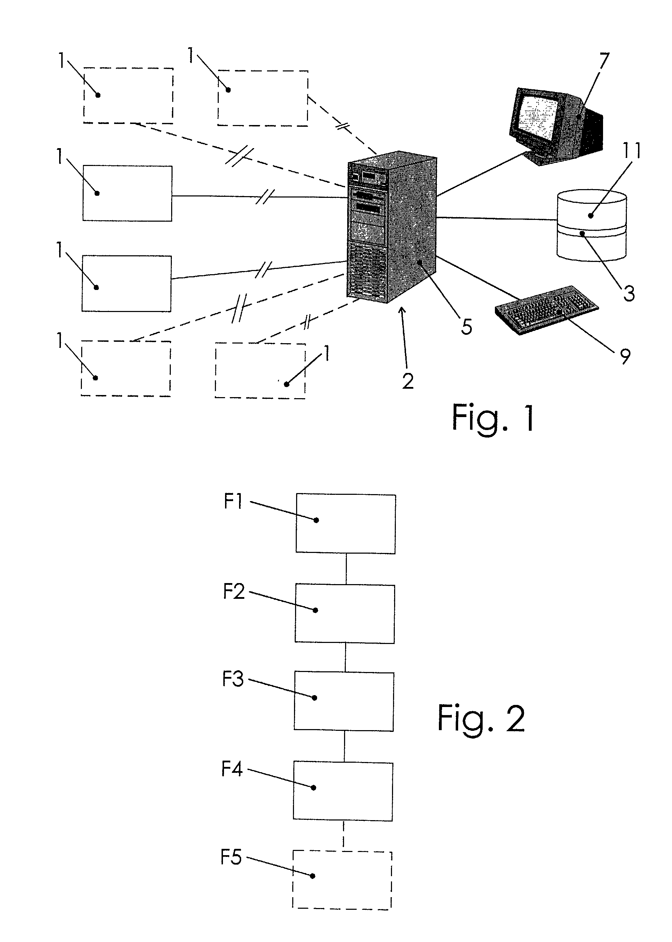

With reference to Fig. 1, a preferred, but nonlimiting embodiment of the system adapted to carry out the process of the invention is shown. Such system substantially comprises at least one managing and processing unit 2 containing the necessary software programs to operate the inventive process. The managing and processing unit 2 is connected to a plurality of users 1, and the connection between unit 2 and users 1 can occur in a direct or remote way (for example through networks, such as Internet, Intranet, etc., that mutually connect computers and/or domestic television apparata or other displaying means), or through cellular telephone network, etc. To allow its operation, the processing and managing unit 2 comprises a central unit 5 (for example a so-called Central Processing Unit or CPU) and moreover displaying means 7 (such as a liquid crystal display or a cathode ray display), data entering means 9 (for example a keyboard) and data storing means 11 (for example of the magnetic type, such as an hard disk, or a tape or CD unit) on which both the programs allowing to carry out the process of the invention, and the data bases that contain data about registered users 1 and information used by the process of the invention, are stored.

With reference to Fig. 2, the process of the invention, adapted to be carried out by a system such as the one shown in Fig. 1, comprises the steps of:
- connecting (F1) at least one user 1 to the managing and processing unit 2;
- accessing (F2) by the user 1 to a reserved area 3 stored on the managing and processing unit 2, in particular in the data storing means 11;
- displaying and possibly modifying (F3) by the user 1 the data contained within the reserved area 3, in which such data are accessible to the user 1 in an exclusive and ordered way according to a hierarchical pipeline that assigns to each one of the data both a "parent - son" attribute and a "predecessor - successor" attribute;
- managing (F4) procedures related to constructions based on said data; and
- possibly programming and customising (F5) the structure of data stored in the managing and processing unit 2 by a user 1 having a system administrator profile.

As can be understood by the general description of the steps of the inventive process, it thereby allows the operators of a project to share documents, information and procedures on a single communication protocol oriented to be applied on networks of computers. Such process provides the tools to structure the activities, coordinate the resources and follow the procedures from their planning steps to their testing steps according to the quality system and the legal standards in force. Moreover, it guarantees the safety and legal value of the communications among those people operating in a contract and bid environment that is typical of the construction projects.

The project users 1 (that typically comprise industries and organisations in the field of constructions) obtain an exclusive working space that can be easily consulted (for example in an html format) and directly accessible with an Internet browser.

The general process objective is allowing to transfer the daily operations of involved people into respective information modes in order to save time, reduce costs and improve project quality.

The platform on which the process is based guarantees data safety (SSL), reserved accesses and legal value of communications (digital signature and registered letter with acknowledgment receipt) among the professionals operating in a contract and bid environment.

The process also provides an extremely flexible solution, because it makes available for users 1 a reserved space for authorised users where all workflows and procedures can be customised according to updated legal provisions and operating standards of the organisation using it. Its macro-functionalities can be described as follows.

### 1. COMMUNICATION

The inventive process and system manage the exchange of information among users 1 on a data base server, on mail addresses and, optionally, by means of mobile telephone and telefax messages. In particular, they real-time communicate to users 1 all data base variations regarding them:
* requests of actions to be carried out on activities or papers in which the user 1 is called to take part depending on his role within a project. The workflow on a specific activity or on a specific paper is the pipelined sequence of a series of requests for actions to be carried out made by a user 1 to another user 1 (as configured by the platform administrator) that allow proceeding by subsequent steps towards the conclusion of a workflow;
* warnings, follow-ups and acknowledge receipts for transmissions allowing the user 1 to obtain a confirmation of the transmission of a request of an action on an activity or a paper and to proceed with the follow-up or the urgency warning of a particular action to be carried out for himself or another user 1;
* transmission letters and documentation distribution lists that allow automating the list of users 1 that have to view an activity or a paper that ended the workflow.

### 2. SHARING

The inventive process and system allow sharing the files (any extension and size) on a remote data base server.

The access to individual documents can be extended or limited only to those affected users depending on their taking part into a single project or also the project role that the user 1 performs.

Papers and procedures are structured by activity and not by collecting folders like in an existing and standard document storage system. This allows knowing as number and quality the papers that have to be filled in to finish an activity pertaining to the specific building or plant process.

The platform makes available the file displaying tools of several known application programs (for example, MS Office®, AutoCAD®, etc.), even if one has no suitable software available installed on one's own computer and a library of models with the same context as the document to be prepared.

Files downloading and uploading are not user-visible and therefore they do not stop the software operativity, allowing many simultaneous operations.

### 3. COOPERATION

The inventive process and system guarantee the correct and efficient development of procedures:
* they allow managing one or more projects with any amount and complexity;
* they manage the project organization chart defining project roles and related responsibilities that the roles must assume;
* they follow the workflow of activities and papers according to the procedures established by the platform administrator in terms of sequence of requests of actions exchanged among project roles. For example, they allow following the flow of assignments, filling-ins, visas, checks and approvals, and, in general, of all actions set by the platform administration; users 1 will eventually obtain the chance of multiple and different choices;
* they suggest to the users 1 the timing sequence of activities, documents and procedures, that is, they propose the development of a workflow on a paper or activity at the end of the flow of another paper or activity. For example, the approval of a "Meeting Agenda" suggest activating the flow for filling-in, revising, checking, knowing and approving the "Yard Meeting Report";
* they orderly store and automatically give a protocol number to all documents that ended the workflow;
* they allow preparing the reports about advancement status of activities and papers.

From the operating logic point of view, the work on a project consists in developing activities and in filling-in papers.

As regards the activities, each one of them provides for the preparation of specific written or graphic papers and the execution of possible subactivities, with accurate rules for a hierarchical and time sequence.

A provided activity is suggested by the system to a responsible that can decide whether to start it, defer it or possibly delete it.

The activity responsible can possibly delegate its control to a manager.

Depending on the type of activity, the system automatically assigns its responsibilities (for example the system proposed to the Project Manager to perform a service conference activity) and activates the workflow on provided papers.

The expiry signalling settings on the activity remind its responsible or manager to periodically verify its advancement status.

The system deems an activity concluded when all provided papers have been finally approved and the subactivities have ended, provided an active confirmation has been given by the responsible or manager.

As regards the papers, instead, a written or graphic paper must follow the workflow according to the rules set when customising.

The workflow provides that the project roles perform the actions provided as an option.

Such flow is automated in its major components:
actions to be carried out, project roles, predefined text for transmission or distribution, reference files, models to be used for filling it in.

The system further provides the logic structure for pipelining, through precedence and consequence relationships, the workflows of other papers, allowing to manage the project procedures.

The inventive process and system show some innovative aspects, for implementing the above-stated activities and papers. The main aspect deals with the data structure: the application (for example developed in Lotus Notes™ environment and transported onto a web interface through a Lotus Domino™ server) is a document data base that manages a structure of documents catalogued by categories or "views".

Generally such structures are characterised by a document property that allows the hierarchical PARENT - SON pipelining (with a structure that is similar to the Microsoft Windows® 'Resource Explore' application):
A (parent = 0)
→ B (parent = A)
→ C (parent = B)
→ D (parent = A)

The described structure allows defining a serial or parallel execution depending on its structuration branches.

The innovative features brought about by the inventive process consist in managing a further PREDECESSOR - SUCCESSOR property that makes the time context implicit to the document structure. Therefore, not only the hierarchical order is guaranteed, but also the chronologic succession order among workflows of different documents.

In the previous example:
A (parent = 0; predecessor = 0)
→ B (parent = A; predecessor = D)
→ C (parent = B; predecessor = 0)
→ D (parent = A; predecessor = 0)
the workflow activation will be implied on individual documents with this order:
A (parent = 0; predecessor = 0)
D (parent = A; predecessor = 0) → B (parent = A; predecessor = D)
C (parent = B; predecessor = 0)

This type of logic allows performing in series elements that in the parent - son structure are in parallel by hierarchical order.

As regards the management of actions, roles and users 1, a platform of the "extranet" type is a remote exclusive and reserved space for registered / certified users by the server 2 to which they belong.

Generally the access to a document is allowed to users 1 as function of the profile that is enabled (author, revisor); this implies that every user 1 is associated with a certain access restriction.

In such a way, the workflow is not managed through any exchange of papers between one user 1 and another, but simply by sharing a document among users 1 having different profiles. The affected users 1 will simply be notified about the changes of document status due to performed reading or writing actions by the users 1.

On the contrary, the inventive process is intended to simulate the passage of an Activity or a Paper "from one desk to another" through the pipelining of transmissions from a Project Role to another.

Substantially, the workflow managed by the inventive process and system is the sequence of Actions addressed by a user 1 to another user depending on the Project Role that has been assigned thereto.

Properly, a user 1 certified by the server 2 will be associated with a specific Project Role as function of the "Appointment" Agent that is launched upon completing a workflow Action on a single Paper or Activity. The Appointment Agent launch is potentially possible following any action; it will be the platform administrator's task to enable it on the suitable ones depending on the procedure logic.

In this way, for example, the CONTRACTOR Project Role will be associated with the MARIO ROSSI user upon accepting the 'Contract Award Report' Paper.

Following the Appointment Agent execution, the user 1 will have access to the project space 3 and will perform the Actions on Activites and Papers pertaining thereto.

This principle makes the management of users 1 implicit to the data structure because every single Activity or Paper will have its characteristic composition of Actions reserved for specific Project Roles.

Moreover, the inventive process and system will make available a space 3 for programming/customising the structure of data / Actions / Roles.

Such space 3 is reserved for authorised users 1 conventionally called "Corporate Administrators". They are able to:
* create the data structure (Activities / Papers) through the use of the PARENT-SONS and PREDECESSOR/SUCCESSOR logic;
* characterised for every single item of the data structure the workflow logic in terms of associated Actions and Project Roles;
* set the Appointment Agents position;
* supply the document models to he used for paper enclosures;
* create the information help for performing the procedures.

In general, the space 3 allows the "Corporate Administrator" to make operating and automatic the procedures provided by the laws in force and by the practice of the industrial organisation using it. In particular, in countries where a legislative environment is in force with Civil and Penal Codes, the projects in the building, civil works and plant sectors (AEC Architecture, Engineering, Construction) are carried out by means of procedures complying with consolidated juridical institutes that refer to disciplines for managing public and private Contracts.

The inventive system and process allow, for example, to carry out the tasks of Services Assignment, of signing Bid Contracts, Work Management, Technical Yard Assistance, Testing according to the operating modes being pre-set by the "Corporate Administrator". For example, the Work Management will be able to carry out the Work Delivery, Material Acceptance, Service Order procedures and any other necessary procedure to perform the specific Work Management tasks.

Some preferred embodiments of the present invention have been previously shown and described: obviously, to the skilled people in the art numerous variations and modifications will be immediately evident, that are functionally equivalent to the previous ones, and that fall within the scope of the invention as pointed out in the enclosed Claims.

For example, the invention can currently be practiced by means of a computer program product comprising a set of instructions that are adapted to perform the above-described process. Or, for this purpose, a computer 2 could be used, comprising storage means 11 in which a computer program product as seen above is stored, and further comprising managing, processing and controlling means 5, 7, 9 (Fig. 1) adapted to carry out the above computer program product to implement the process according to the invention.

However, the invention could be carried out in the future with any hardware or software means or through any communication support that allow obtaining the objects that the process of the invention nowadays satisfies with the currently-available technologic tools.

## Claims

1. Process for automatically managing procedures, activities and workflows in the construction industry, **characterised in that** it comprises the steps of:
- connecting (F1) at least one user (1) of a plurality of users (1) to a managing and processing unit (2);
- accessing (F2) by said user (1) to a reserved area (3) stored on said managing and processing unit (2);
- displaying and possibly modifying (F3) by said user (1) the data contained within said reserved area (3), said data being accessible to said user (1) in an exclusive and ordered way according to a hierarchical pipeline that assigns to each one of said data both a "parent - son" attribute, and a "predecessor - successor" attribute; and
- managing (F4) procedures related to constructions based on said data.

2. Process according to Claim 1, **characterised in that** at least one of said users (1) is a privileged user of an administrator type, and **in that** it further comprises the step, managed by said administrator user (1), of programming and customising (F5) the structure of data stored in said managing and processing unit (2).

3. Process according to Claim 2, **characterised in that** said step of programming and customising (F5) comprises the sub-steps of:
- creating a structure of data comprising Activities and Papers by using said "parent - son" and "predecessor - successor" attributes assigned to each one of said data depending on the other data being present;
- characterising, for every single data of the structure, a workflow logic in terms of associated Project Actions and Roles;
- indicating the Appointment Agent position;
- providing document models to be used for paper enclosures; and
- possibly creating an information help for carrying out the procedures.

4. Process according to Claim 1, **characterised in that** said step of managing (F4) the procedures comprises the sub-steps of:
- managing at least one, and possibly simultaneously a plurality of construction projects;
- managing an organization chart for each one of said projects, by assigning such roles and responsibilities as to get to the preparation of a contract and the filling-in of assignment reports;
- carrying out a workflow on the papers;
- suggesting the time sequence of activities, documents and procedures for every project;
- storing the approved documentation in a project folder; and
- filling-in reports related to advancement status for activities and reports.

5. Process according to Claim 4, **characterised in that** said step of carrying out a workflow on the papers comprises the steps of performing requests, assignments, filling-ins, visas, checks and approvals related to said papers.

6. Process according to Claim 1, **characterised in that** said step of displaying and possibly modifying (F3) comprises the sub-steps of:
- displaying notifications of actions to be carried out by said user (1);
- displaying warnings and follow-ups to be sent by said user (1);
- displaying to said user (1) transmission letters and documentation distribution lists; and
- displaying to said user (1) transmission acknowledge receipts;
- said user (1) being enabled to modify all displayed information.

7. System for automatically managing procedures, activities and workflows in the construction industry, **characterised in that** it comprises:
- a managing and processing unit (2) adapted to be connected to at least one user (1) of a plurality of users (1);
- means (2) for allowing the access by said user (1) to a reserved area (3) stored (in 11) on said managing and processing unit (2);
- means (7, 9) for displaying and possibly modifying by said user (1) the data contained within said reserved area (3), said data being accessible to said user (1) in an exclusive and ordered way according to a hierarchical pipeline that assigns to each one of said data both a "parent - son" attribute, and a "predecessor - successor" attribute; and
- means (2) for managing procedures related to constructions based on said data.

8. System according to Claim 7, **characterised in that** at least one of said users (1) is a privileged user of an administrator type, and **in that** it further comprises means (2) for programming and customising the structure of data stored in said managing and processing unit (2).

9. System according to Claim 8, **characterised in that** said means (2) for programming and customising comprise:
- means (2) for creating a structure of data comprising Activities and Papers by using said "parent - son" and "predecessor - successor" attributes assigned to each one of said data depending on the other data being present;
- means (2) for characterising, for every single data of the structure, a workflow logic in terms of associated Project Actions and Roles;
- means (2) for indicating the Appointment Agent position;
- means (2) for providing document models to be used for paper enclosures; and
- means (2) for possibly creating an information help for carrying out the procedures.

10. System according to Claim 7, **characterised in that** said means (2) for managing the procedures comprise:
- means (2) for managing at least one, and possibly simultaneously a plurality of construction projects;
- means (2) for managing an organization chart for each one of said projects, by assigning such roles and responsibilities as to get to the preparation of a contract and the filling-in of assignment reports;
- means (2) for carrying out a workflow on the papers;
- means (2) for suggesting the time sequence of activities, documents and procedures for every project;
- means (2, 11) for storing the approved documentation in a project folder; and
- means (2) for filling-in reports related to advancement status for activities and reports.

11. System according to Claim 10, **characterised in that** said means (2) for carrying out a workflow on the papers comprise means (2) for performing requests, assignments, filling-ins, visas, checks and approvals related to said papers.

12. System according to Claim 7, **characterised in that** said means (2) for displaying and possibly modifying comprise:
- means (2, 7) for displaying and modifying notifications of actions to be carried out by said user (1);
- means (2, 7) for displaying and modifying warnings and follow-ups to be sent by said user (1);
- means (2, 7) for displaying to said user (1) and for modifying transmission letters and documentation distribution lists; and
- means (2, 7) for displaying to said user (1) and modifying transmission acknowledge receipts.

13. System according to Claim 7, comprising a managing and processing unit (2) directly or remotely connected to a plurality of users (1), said managing and processing unit (2) being equipped with a central unit (5), displaying means (7), data entering means (9) and storing means (11) on which there are stored both the programs realising the process according to any one of Claims 1 to 6, and the data bases containing information used by the process itself.

14. Computer program product comprising a set of instructions adapted to realise the process according to any one of Claims 1 to 6.

15. Computer (2) comprising storing means (11) in which a computer program product according to Claim 14 is stored, and further comprising managing, processing and controlling means (5, 7, 9) adapted to carry out the computer program product according to Claim 14 for implementing the process according to any one of Claims 1 to 6.
